(19) Europäisches Patentamt
European Patent Office
Office européen des brevets

(11) **EP 4 159 410 A1**

(12) **EUROPEAN PATENT APPLICATION**
published in accordance with Art. 153(4) EPC

(43) Date of publication:
**05.04.2023 Bulletin 2023/14**

(21) Application number: **20846015.4**

(22) Date of filing: **09.10.2020**

(51) International Patent Classification (IPC):
**B29C 51/30** (2006.01)      **B29C 43/36** (2006.01)
**B29C 70/46** (2006.01)

(52) Cooperative Patent Classification (CPC):
**B29C 70/461; B29C 43/36; B29C 51/30;
B29C 70/46**

(86) International application number:
**PCT/JP2020/038316**

(87) International publication number:
**WO 2021/020593 (04.02.2021 Gazette 2021/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.05.2020  JP 2020093120**

(71) Applicant: **The Mot Company, Ltd.
Setagaya-ku, Tokyo 158-0087 (JP)**

(72) Inventors:
• **SAITO Tomoaki
  Tokyo 146-0083 (JP)**
• **SHUTO Yasushi
  Miura-gun, Kanagawa 240-0113 (JP)**

(74) Representative: **Wohlfahrt, Jan Günther et al
Gleiss Große Schrell und Partner mbB
Patentanwälte Rechtsanwälte
Leitzstraße 45
70469 Stuttgart (DE)**

(54) **DIE**

(57)   Problem
   To provide a pressing device that does not leak resin and that is capable of significantly reducing the number of voids formed in the resin while using a smaller amount of discharged resin than conventional amounts.
   Solution to Problem
   A die which comprises a concave die, a blank holder, and a punch passing through the blank holder, and which is for manufacturing a fiber-reinforced resin molded article having a drawn shape obtained by deep drawing a prepreg, wherein: the concave die has a first reference surface, a second reference surface that forms the bottom of a concave shape from the first reference surface, and an upright surface connecting the first reference surface and the second reference surface; the blank holder has a blank holder surface that sandwiches the prepreg together with the first reference surface: the punch has a punch surface that sandwiches the prepreg together with the second reference surface, and a punch side face that sandwiches the prepreg together with the upright surface; and there is a prescribed relationship between R1, which is the radius of curvature of the corner formed by the second reference surface and the upright surface, and R3, which is the radius of curvature of the corner formed by the punch surface and the pinch side face.

FIG. 1

# Description

## Technical Field

The present invention relates to a die for manufacturing a fiber-reinforced resin molded article having a drawn shape obtained by deep drawing a prepregs.

## Background Art

Recently from the viewpoint of the environmental problem the effort to improve the fuel consumption is advancing in automobile industry, aviation industry and the like. In such a situation to reduce the weight of the vehicle body and the airframe, substituting the fiber-reinforced resin for the metal is hoped and the attention is increasingly attracted.

The fiber-reinforced resin can be molded and shaped by heating, has high productivity, is easy to apply secondary process such as deposition, has electric insulation, dose not corrode, and has excellent recyclability. Due to such characteristics, the fiber-reinforced resin is widely used in various fields.

Because the carbon fiber-reinforced resin using the carbon fiber as reinforcing fiber is lightweight and has high strength and high rigidity, in a wide range of fields such as shipping industry, space field, wind power generation, sports goods and the like as well as automobile industry and aviation industry described above, the application study has been conducted and the carbon fiber-reinforced resin has been used already.

Examples of the manufacturing method of the fiber-reinforced resin molded article include the autoclave molding, the oven molding, the press molding, the RTM/VaRTM method, the pultrusion molding, the filament winding, the sheet winding. Among these, from the viewpoint that the productivity is high and that the fiber-reinforced resin molded article of good quality is obtained, the press molding is preferable.

The molding of the fiber-reinforced resin molded article is preferably performed by using the semi-cured prepreg obtained by impregnating the reinforcing fibrous materials such as grass cloth and carbon fiber with a resin mixed with the additives such as the curing agent and the adhesive and heating or drying.

For example, in Patent Document 1 the method of manufacturing the fiber-reinforced resin molded article from the fiber-reinforced resin prepreg by setting the conditions appropriately is described.

## Citation List

### Patent Document

Patent Document 1: JP 6,656,702 B

## Summary of Invention

### Technical Problem

The prepreg is easy to handle because of being semi-cured. The prepreg has the structure that the fiber layer is sandwiched between two resin layers and that the fibers of the fiber layer are long and bundled. When the prepreg having such structure is deep-drawn, there is a problem that the fibers are cut at the corner of the die (where the prepreg is deformed). Therefore, the corner of the die is generally rounded off (chamfering). But the products with good quality cannot be obtained only by rounding the corner simply.

As a result of reviewing the corner of the whole die, not focusing on one corner, the present inventors found that the products with good quality can be obtained by satisfying certain specified conditions.

### Solution to Problem

This is, the present invention includes:

[1] A die which comprises a concave die, a blank holder, and a punch passing through the blank holder, and which is for manufacturing a fiber-reinforced resin molded article having a drawn shape obtained by deep-drawing a prepreg,

wherein the concave die has

a first reference surface,
a second reference surface that forms a bottom of a concave shape from the first reference surface and
an upright surface connecting the first reference surface and the second reference surface, the blank holder has a blank holder surface that sandwiches the prepreg together with the first reference surface, the punch has
a punch surface that sandwiches the prepreg together with the second reference surface and
a punch side face that sandwiches the prepreg together with the upright surface and

wherein R1 which is a radius of curvature of a corner formed by the second reference surface and the upright surface and R3 which is a radius of curvature of a corner formed by the punch surface and the punch side face satisfy a relationship

$$0.1 \leqq R1/R3 \leqq 1.0.$$

[2] A die according to [1],

wherein the punch also has a third reference surface which becomes at the same height as the blank holder surface and

wherein R2 which is a radius of curvature of a corner formed by the first reference surface and the upright surface and R4 which is a radius of curvature of a corner formed by the third reference surface and the punch side face satisfy a relation ship

$$0.1 \leqq R4/R2 \leqq 1.0.$$

[3] A die which comprises a concave die, a blank holder, and a convex die having a convex part and provided with the blank holder around the convex part and which is for manufacturing a fiber-reinforced resin molded article having a drawn shape obtained by deep-drawing a prepreg,

wherein the concave die has

a first reference surface,
a second reference surface that forms a bottom of a concave shape from the first reference surface and
an upright surface connecting the first reference surface and the second reference surface,

the blank holder has a blank holder surface that sandwiches the prepreg together with the first reference surface,
the convex die has

a punch surface that is at the top of a convex part of the convex die and sandwiches the prepreg together with the second reference surface and
a punch side face that forms a side face of the convex part of the convex die and sandwiches the prepreg together with the upright surface and

wherein R1 which is a radius of curvature of a corner formed by the second reference surface and the upright surface and R5 which is a radius of curvature of a corner formed by the punch surface and the punch side face satisfy a relationship

$$0.1 \leqq R1/R5 \leqq 1.0.$$

[4] A die according to [3],

wherein the convex die also has a third reference surface which becomes at the same height as the blank holder surface and
wherein R2 which is a radius of curvature of a corner formed by the first reference surface and the upright surface and R6 which is a radius of curvature of a corner formed by the third reference surface and the punch side face satisfy a relationship

$$0.1 \leqq R6/R2 \leqq 1.0.$$

Advantageous Effects of Invention

As a result of reviewing chamfering the corner of the whole die, the products with good quality can be obtained by satisfying certain condition by the radius of curvature of the corner while preventing the fibers of the prepreg from being cut.

Brief description of the drawings

[Fig.1] Fig.1 is the illustrating cross-sectional drawing of step (a) in drawing the prepreg composed of the fiber-reinforced resin by the die of Example 1.
[Fig.2] Fig.2 is the illustrating cross-sectional drawing of step (b) in drawing the prepreg composed of the fiber-reinforced resin by the die of Example 1.
[Fig.3] Fig.3 is the illustrating cross-sectional drawing of step (c) in drawing the prepreg composed of the fiber-reinforced resin by the die of Example 1.
[Fig.4] Fig.4 is the illustrating cross-sectional drawing of step (d) in drawing the prepreg composed of the fiber-reinforced resin by the die of Example 1.
[Fig.5] Fig.5 is the enlarged drawing of the part A in Fig.1.
[Fig.6] Fig.6 is the enlarged drawing of the part B in Fig.1.
[Fig.7] Fig.7 is the illustrating cross-sectional drawing of step (a) in drawing the prepreg composed of the fiber-reinforced resin by the die of Example 2.
[Fig.8] Fig.8 is the illustrating cross-sectional drawing of step (b) in drawing the prepreg composed of the fiber-reinforced resin by the die of Example 2.

Form to Carry Out Invention

The present invention is described below by referencing the drawings of Example. Note that the invention is not limited to the Examples described below. The suitable modifications are possible within the range known to a parson skilled in the art.
In the specification the fiber-reinforced resin molded article is a molded article obtained by heating and cooling the prepreg obtained by impregnating a bundle of the fiber such as carbon fiber and glass fiber with the thermoplastic resin or the thermosetting resin and drying to cure. Examples further include a fiber-reinforced resin-metal integrated composite molded article obtained by heating and contacting the prepreg and the metals such as aluminum, iron, and titanium under pressure.

In the present invention, the drawn shape is a shape that is made of one board, seamless, and has a shape like the container with a bottom.

Note that the fibers are not basically short fibers but long fibers bundled. As a prepreg used in the present invention. a prepreg having a general prepreg structure can be used. The general prepreg structure is a structure that the fiber layer is sandwiched by the resin layers from both sides by impregnating with the resin.

In the present invention, the resin used for the fiber-reinforced resin is not particularly limited. One or more of the thermosetting resin and the thermoplastic resin can be used.

Examples of the thermosetting resin include the epoxy resin, the vinyl ester resin, the unsaturated polyester resin, polyurethane resin and the phenol resin.

Also, examples of the thermoplastic resins include polypropylene, polyethylene, polyvinyl chloride, polystyrene, polyvinyl acetate, polyurethane, Teflon (registered trademark), acryl, polyamide, polyacetal, polycarbonate, polyether (polyetheretherketone, polyetherketone, polyethersulfone and the like), polyester, or the combination thereof.

These resins may be used alone or in combination of two or more.

Examples

Example 1

(Constitution)

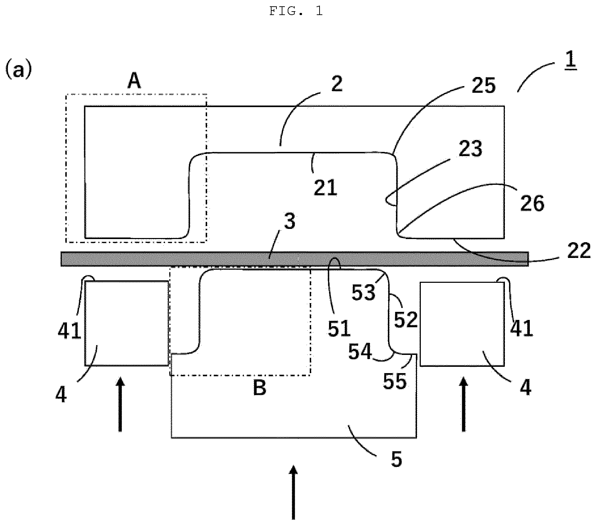

In Fig.1, 1 is the die for manufacturing the fiber-reinforced resin molded article having the drawn shape, 2 is the concave die, 3 is the prepreg, 4 is the blank holder, and 5 is the punch. While the prepreg 3 was held by the blank holder 4, the punch 5 passes through the hole of the blank holder 4 and moves upward and pushes the center part of the prepreg 3 into the concave part of the concave die 2 to form the drawn shape. This Example has a mechanism that the punch 5 is raised upward from below. But the punch 5 and the blank holder 4 may be fixed and the concave die 2 may be lowered downward from above to form the drawn shape. The punch 5 may be arranged relatively above the concave die 2 and the drawing may be performed by moving any one or both the punch 5 and the concave die 2 vertically.

(Concave Die)

In Example 1, the female concave die 2 is arranged above and the male punch 5 is arranged below. The concave part of the concave die 2 is arranged to be concave upwardly and has such size that the punch 5 can enter the concave part, and the fiber-reinforced resin molded article 3A can be formed.

The surface for pressing of the concave die 2 has the first reference surface 22, the second reference surface 21 forming the bottom of the concave shape from the first reference surface 22, and the upright surface 23 connecting the first reference surface 22 and the second reference surface 21.

The first reference surface 22 is a part which sandwiches and fixes the prepreg 3 together with the blank holder surface 41 of the blank holder 4 and the third reference surface 55 described below of the punch 5. The second reference surface 21 is a surface which sandwiches a part of the prepreg 3 together with the punch surface 51 of the punch 5, which is pushed by the punch 5 by raising the punch 5 and drawing the prepreg 3 to deform and corresponds to the bottom surface of the concave part. In Example 1, the second reference surface 21 is a parallel surface to the first reference surface 22. The upright surface 23 was the surface connecting the first reference surface 22 and the second reference surface 21. The height of the upright surface 23 corresponded to the depth of the concave part. When the punch 5 moved upward, the upright surface 23 sandwiched the prepreg 3 together with the punch side face 52 of the punch 5.

(Punch)

In Example 1, the male punch 5 is arranged below the concave die 2. The shape of the punch 5 is a shape capable of forming the desired drawn shape and examples of the shape include cylindrical shape and quadrangular prismatic shape. One of the two shapes can be used. The shape can be adjusted according to the molded article obtained accordingly. The punch 5 is in a male-female relation to the concave die 2.

The punch 5 is provided with the punch surface 51 coming in contact with the prepreg 3 to draw the prepreg 3. The punch surface 51 comes in contact with the prepreg 3 and pushes the prepreg 3 upward and can be brought into the states that the punch surface 51 can sandwich the prepreg 3 together with the second reference surface 21

The punch 5 is provided with the punch side face 52 on the side face. The punch side face 52 is a surface forming the side face of the punch 5. When the punch 5 is raised, the punch side face 52 sandwiches the prepreg 3 together with the upright surface 23 as a result.

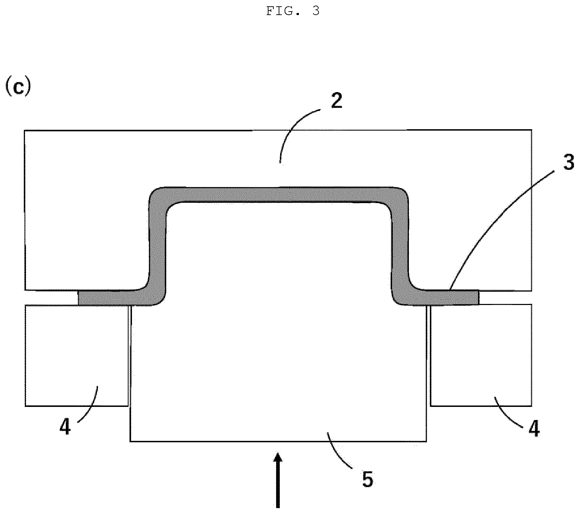

The punch 5 is also provided with the third reference surface 55. The third reference surface 55 is a surface capable of being at the same height as the blank holder surface 41 described below. Specifically, when the third reference surface 55 sandwiches the prepreg 3 with the concave die 2 (namely the states in Fig.3), the third reference surface 55 is at the same height as the blank holder surface 41. The third reference surface 55 and the blank holder surface 41 sandwich the prepreg 3 together with the first reference surface 22 of the concave die 2.

(Blank Holder)

The blank holder 4 sandwiches the prepreg 3 by using the blank holder surface 41 of the blank holder 4 together with the first reference surface 22 of the concave die 2. Therefore, the blank holder surface 41 is a surface coming in contact with the prepreg 3. By providing the blank holder 4, the occurrence of the wrinkles of the fiber-reinforced resin molded article 3A can be suppressed and the prepreg 3 is fixed around the place for drawing, so that the drawing can be performed.

(Radius of Curvature)

The corner 25 formed by the second reference surface 21 inside the concave die 2 and the upright surface 23, the corner 26 formed by the first reference surface 22 and the upright surface 23, the corner 53 formed by the punch surface 51 and the punch side face 52, and the corner 54 formed by the punch side face 52 and the third reference surface 55 are not angular but rounded by chamfering. The corner 25 is a corner inside the concave part, but is shaped so as not to be angular (so that the corner has the radius of curvature). The corner 54 is the same as the corner 25.

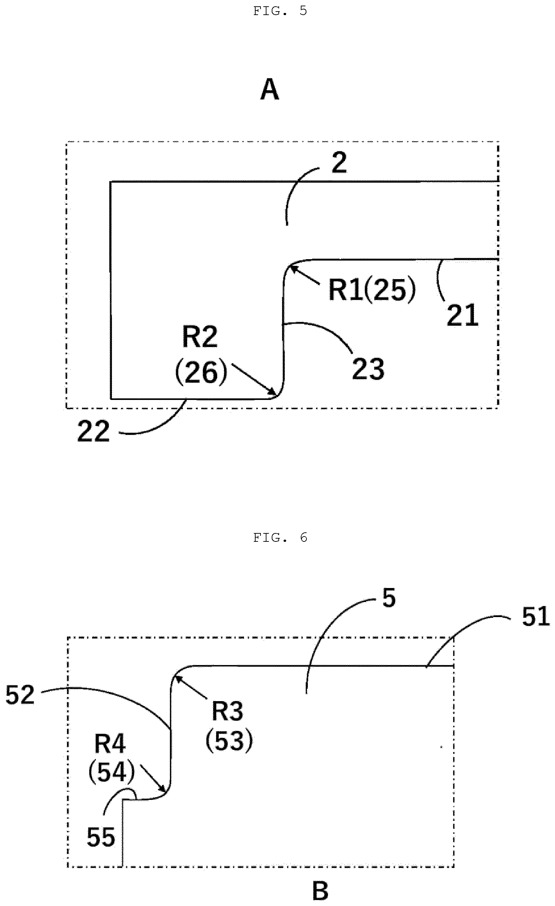

In the die 1 of Example 1, R1 which is the radius of curvature of the corner 25 and R3 which is the radius of curvature of the corner 53 (see Fig. 5 and Fig.6) satisfy the relationship:

$$0.1 \leqq R1/R3 \leqq 1.0.$$

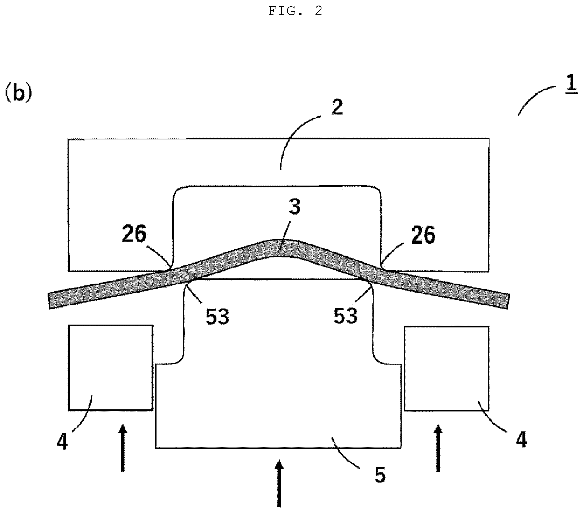

R1 can be referred to Fig.5. R3 can be referred to Fig.6. Fig.5 is the enlarged drawing of the part surrounded with the dotted line and shown by A in Fig.1. Fig.6 is the enlarged drawing of the part surrounded with the dotted line and shown by B in Fig.1. The above formula means that R3 is equal to or more than R1 and that the ratio (R1/R3) is equal to or more than 0.1. When drawing the prepreg, at first, the pressure is applied to the part in contact with the corner 53, then the prepreg comes in contact with the corner 25, while the resin melts (The state is shown in Fig.2). Therefore, the corner 53 comes in contact with the prepreg before the corner 25. In present invention, it is founded that when the radius of curvature of the corner which come in contact with the prepreg first is made larger than the corner which comes in contact with the prepreg later, the fibers are not cut and the product obtained has excellent appearance.

When R1 is larger than R3, the prepreg first comes in contact with the corner having a smaller radius of curvature, therefore the fibers of the prepreg are damaged and the appearance of the products becomes worse. When R1 is extremely smaller than R3 (The ratio is less than 0.1), manufacturing the die is extremely difficult and additionally the corner 25 are sometimes chamfered too slightly, therefore the fibers of prepreg become easy to be damaged.

R1 and R3 can be changed according to the shape and the size of the products, therefore R1 and R3 are not particularly limited, but for example, R1 of about 0.1 mm to 50 mm can be used and also, R3 of about 0.1 mm to 50 mm can be used.

In addition, it is preferable embodiment that R2 which is the radius of curvature of the corner 26 formed by the first reference surface 22 and the upright surface 23 and R4 which is the radius of curvature of the corner 54 formed by the third reference surface 55 and the punch side face 52 satisfy the relationship:

$$0.1 \leqq R4/R2 \leqq 1.0.$$

The above formula means that R2 is equal to or more than R4 and that the ratio (R4/R2) is equal to or more than 0.1. When R4 is larger than R2 (namely R4/R2 is more than 1.), the prepreg 3 comes in contact with the corner 26 having a small radius of curvature (R2) first, therefore the excessive tension is applied to the prepreg, which is not preferable. When R4/R2 is less than 0.1, the manufacturing cost of the die becomes high. In addition, the radius of curvature of the corner 54 (R4) becomes too small, therefore the fibers may be damaged.

The size of the concave die 2 is not particularly limited, and for example, the length and the width are 200 mm to 1500 mm and the height is 50 mm to 500 mm. The depth of the concave part is also not particularly limited, and for example, about 30 mm to 300 mm. The horizontal width and the vertical width of the concave part is also not particularly limited, and both are about 100 mm to 800 mm.

[Drawing Method]

The drawing by using the die 1 in Example 1 is performed as follow.

At first, as shown in Fig.1, the prepreg 3 is positioned on the blank holder surface 41 of the blank holder 4 and the punch surface 51 of the punch 5 whose temperatures are raised to the prescribed temperature (Step (a)), then the blank holder 4 and the punch 5 are raised.

When the prepreg 3 comes in contact with the first reference surface 22 of the concave die 2 whose temperature is the prescribed temperature and the certain pressure is applied to the prepreg 3, the blank holder 4 is stopped. While the punch 5 continues being raised and lifts the part of the prepreg 3 which is in contact with the punch surface 51 (see Step (b) in Fig.2). When the prepreg 3 is lifted, the corner 53 comes in contact with the prepreg 3 before the corner 25 and the corner 26 come in contact with the prepreg 3 before the corner 54, therefore the former corner preferably has a larger radius of curvature than the latter corner. Then the punch 5 is raised to the highest position and maintained at the place (Step (c) in Fig.3).

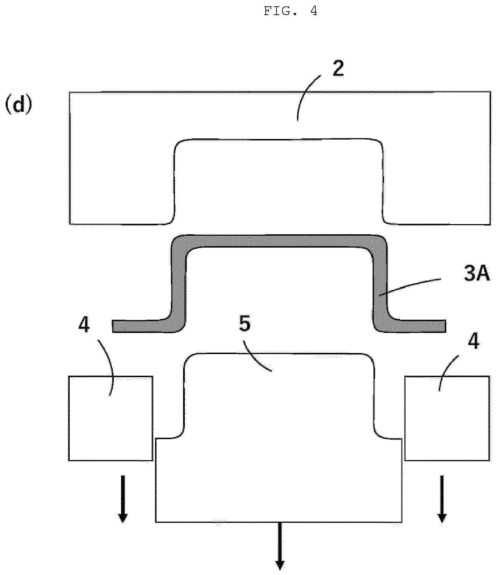

After the certain time passes, the temperature is lowered. While that the resin that is in nonfluidic state is observed, the blank holder 4 and the punch 5 are moved downward as shown in Fig.4. Then the fiber-reinforced resin molded article 3A is taken out (Step (d)).

The concave die 2, the blank holder 4, and the punch 5 can be provided with heaters by which the temperatures of these components are raised to the prescribed temperature to shape the resin, which are not shown in Figures. Around these components, the heaters can also be positioned to raise the temperature. As for the fiber-reinforced thermoplastic resin molded article, when the molding temperature is too high, the burning and the glossiness failure are caused and when the temperature is too low during maintaining, the fluidity of the resin becomes lower, therefore, the deformation and the whitening are caused.

In Examples the prepregs manufactured by Mitsubishi Chemical Corporation (twill weave, thickness 0.23 mm per one sheet) of 600 mm × 400 mm are used as the prepreg 3 and one or more prepregs are laminated to use so as to obtain the finished fiber-reinforced resin molded article having a thickness of 1.6 mm. The quadrilateral prepreg having one side of about 100 mm to 2000 mm is also applicable. The prepreg having a shape except for the quadrilateral can be used but, in that case the prepreg preferably has the same area as the quadrilateral having one side of 100 mm to 2000 mm. The technique disclosed in the specification can be used for manufacturing the fiber-reinforced resin molded article having a thickness of 0.2 to 5.0 mm. The thickness of the finished molded article can be adjusted by the number of the prepregs for laminating. When the prepregs are laminated, the adhesive and/or adhesive resin sheet can be also positioned between the prepregs to enhance the adhesive strength of the prepregs (to prevent the prepregs from being peeled off from each other). For example, the acrylic adhesive and acrylic adhesive resin sheet can be used as an adhesive resin sheet. The adhesive resin sheet may be positioned in all places between the prepregs laminated or in the required places among the places between the prepregs.

When the pressing is performed continuously, the temperature of the die needs not to be returned to the room temperature and for example, may be 60 to 90 °C. When the temperature of the die is high to some extent, the time and the energy required to heat the die again can be reduced.

Example 2

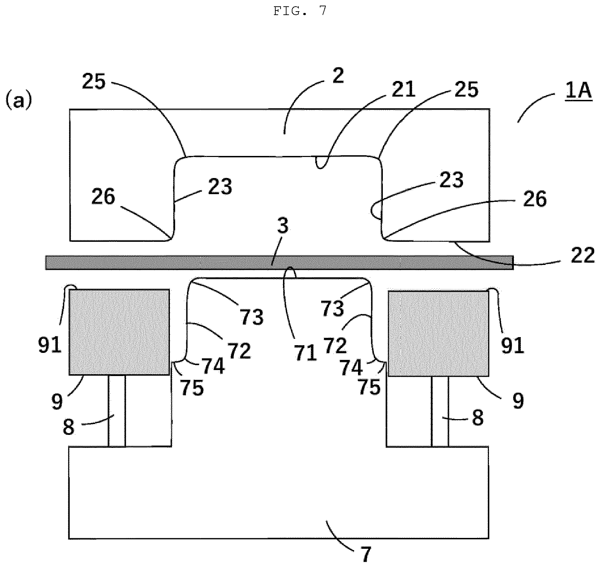

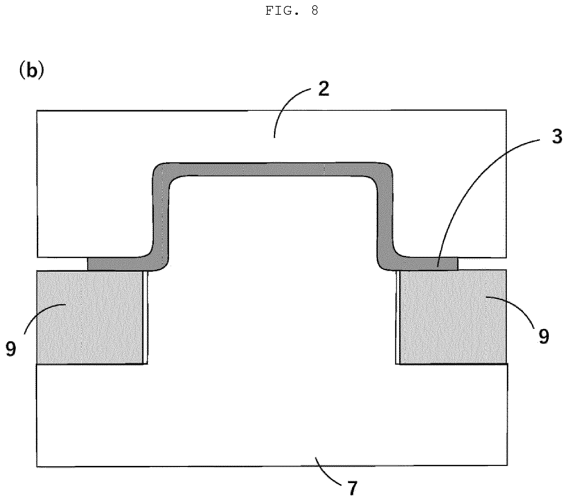

Fig.7 and Fig. 8 show the embodiment of Example 2 in the present invention. The cylindrical or the prismatic punch used in Example 1 is not used but the convex die 7 (convex punch) is used for the die 1A in Example 2. The blank holder 9 is provided through the telescopic parts 8 around the convex part of the convex die 7 (see Fig.5 (a)).

The drawing is performed like Example 1. The prepreg 3 is positioned on the convex die 7 and the blank holder 9 heated and then the convex die 7 and the blank holder 9 are raised. After the prepreg 3 comes in contact with the first reference surface 22 of the concave die 2, when the pressure reached to the prescribed pressure, the telescopic parts 8 are shortened. Therefore, the pressure is not applied to the prepreg 3 by the blank holder 9 more than necessary. The convex die 7 is raised to draw the prepreg 3 to shape into the prescribed shape (see Fig.6 (b)).

The concave die 2 is the same as Example 1. The blank holder 9 is provided with the blank holder surface 91 which comes in contact with the prepreg 3 and is the substantially same as the blank holder 4 in Example 1 but there is a difference in a point that the blank holder 9 is provided with the telescopic parts 8 connected with the convex die 7.

The convex die 7 has the convex part pushing the prepreg 3 and supporting the blank holder 9 with the parts except for the convex part. The convex part of the convex die 7 has the shape so that the desired drawn shape can be formed and examples of the shape include cylindrical shape and quadrangular prismatic shape. Both can be used.

The convex die 7 is provided with the pinch surface 71 which comes in contact with the prepreg 3 to draw. The punch surface 71 comes in contact with the prepreg 3, pushes up the prepreg 3 upward and sandwiches the prepreg 3 together with the second reference surface 21.

The convex die 7 is provided with the punch side face 72 on the side face of the convex part. The punch side face 72 is a surface forming the side face of the convex part and sandwiches the prepreg 3 together with the upright surface 23 as a result when the convex die 7 is raised.

The convex die 7 is also provided with the third reference surface 75. The third reference surface 75 is the surface which becomes at the same height as the blank holder surface 91. The third reference surface 75 and the blank holder surface 91 sandwich the prepreg 3 together with the first reference surface 22 of the concave die 2.

In Example 2, the angles of the corner 25, the corner 26, the corner 73 and the corner 74 are not set to be 90 degree and these corners are rounded by chamfering.

R1 which is the radius of curvature of the corner 25 and R5 which is the radius of curvature of the corner 73 satisfy the relationship:

$$0.1 \leqq R1/R5 \leqq 1.0.$$

In the preferable embodiment, R2 which is the radius of curvature of the corner 26 formed by the first reference surface 22 and the upright surface 23 and R6 which is the radius of curvature of the corner 74 formed by the third reference surface 75 and the punch side face 72 satisfy the relationship:

$$0.1 \leqq R6/R2 \leqq 1.0.$$

Description of Code

1, 1A: Die
2: Concave Die
3: Prepreg
3A: Fiber-reinforced Resin Molded Article
4,9: Blank Holder
5: Punch
7: Convex die
8: Telescopic Part

**Claims**

1. A die which comprises a concave die, a blank holder, and a punch passing through the blank holder, and which is for manufacturing a fiber-reinforced resin molded article having a drawn shape obtained by deep-drawing a prepreg having one side of 100 to 2000 mm and a thickness of 0.2 to 5.0 mm,

    wherein the concave die has

        a first reference surface,
        a second reference surface that forms a bottom of a concave shape from the first reference surface and
        an upright surface connecting the first reference surface and the second reference surface,

    the blank holder has a blank holder surface that sandwiches the prepreg together with the first reference surface,
    the punch has

        a punch surface that sandwiches the prepreg together with the second reference surface and
        a punch side face that sandwiches the prepreg together with the upright surface and

    wherein R1 which is a radius of curvature of a corner formed by the second reference surface and the upright surface and R3 which is a radius of curvature of a corner formed by the punch surface and the punch side face satisfy a relationship

$$0.1 \leqq R1/R3 < 1.0.$$

2. A die according to Claim 1,

    wherein the punch also has a third reference surface which becomes at the same height as the blank holder surface and
    wherein R2 which is a radius of curvature of a corner formed by the first reference surface and the upright surface and R4 which is a radius of curvature of a corner formed by the third reference surface and the punch side face satisfy a relationship

$$0.1 \leqq R4/R2 < 1.0.$$

3. A die which comprises a concave die, a blank holder, and a convex die having a convex part and provided with the blank holder around the convex part and which is for manufacturing a fiber-reinforced resin molded article having a drawn shape obtained by deep-drawing a prepreg having one side of 100 to 2000 mm and a thickness of 0.2 to 5.0 mm,

    wherein the concave die has

        a first reference surface,
        a second reference surface that forms a bottom of a concave shape from the first reference surface and
        an upright surface connecting the first reference surface and the second reference surface,

    the blank holder has a blank holder surface that sandwiches the prepreg together with the first reference surface,
    the convex die has

        a punch surface that is at the top of a convex part of the convex die and sandwiches the prepreg together with the second reference surface and
        a punch side face that forms a side face of the convex part of the convex die and sandwiches the prepreg together with the upright surface and

    wherein R1 which is a radius of curvature of a corner formed by the second reference surface and the upright surface and R5 which is a radius of curvature of a corner formed by the punch surface and the punch side face satisfy a relationship

$$0.1 \leqq R1/R5 < 1.0.$$

4. A die according to Claim 3,

wherein the convex die also has a third reference surface which becomes at the same height as the blank holder surface and
wherein R2 which is a radius of curvature of a corner formed by the first reference surface and the upright surface and R6 which is a radius of curvature of a corner formed by the third reference surface and the punch side face satisfy a relationship

$$0.1 \leqq R6/R2 < 1.0.$$

FIG. 1

(a)

FIG. 2

(b)

FIG. 3

(c)

FIG. 4

(d)

FIG. 5

A

FIG. 6

B

FIG. 7

(a)

FIG. 8

(b)

## INTERNATIONAL SEARCH REPORT

| International application No. |
| --- |
| PCT/JP2020/038316 |

**A. CLASSIFICATION OF SUBJECT MATTER**
B29C 51/30(2006_01)i; B29C 43/36(2006_01)i; B29C 70/46(2006,01)i
FI: B29C43/36; B29C70/46; B29C51/30

According to International Patent Classification (IPC) or to both national classification and IPC

**B. FIELDS SEARCHED**

Minimum documentation searched (classification system followed by classification symbols)
B29C51/30; B29C43/36; B29C70/46

| Documentation searched other than minimum documentation to the extent that such documents are included in the fields searched | |
| --- | --- |
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2013/031860 A1 (TEIJIN LTD.) 07 March 2013 (2013-03-07) claims 1-10, paragraphs [0031]-[0042], [0121]-[0136], [0171], fig. 19 | 1-4 |
| Y | WO 2013/021719 A1 (FOUNDATION FOR THE PROMOTION OF INDUSTRIAL SCIENCE) 14 February 2013 (2013-02-14) fig. 2, 22, 31 | 1-4 |
| Y | WO 2017/010266 A1 (CAP CO., LTD.) 19 January 2017 (207-01-19) fig. 5-7 | 1-4 |
| A | JP 2005-153170 A (SHOWA DENKO PACKAGING K.K.) 16 June 2005 (2005-06-16) entire text | 1-4 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 13 November 2020 (13.11.2020) | 01 December 2020 (01.12.2020) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

## INTERNATIONAL SEARCH REPORT
Information on patent family members

International application No.

PCT/JP2020/038316

| Patent Documents referred in the Report | Publication Date | Patent Family | Publication Date |
|---|---|---|---|
| WO 2013/031860 A1 | 07 Mar. 2013 | US 2014/0178631 A1 claims 1-10, paragraphs [0115]-[0120], [0282]-[0298], [0333], fig. 19<br>EP 2752442 A1<br>CN 103764729 A<br>KR 10-2014-0066171 A | |
| WO 2013/021719 A1 | 14 Feb. 2013 | EP 2743062 A1 fig. 2, 22, 31 | |
| WO 2017/010266 A1 | 19 Jan. 2017 | (Family: none) | |
| JP 2005-153170 A | 16 Jun. 2005 | (Family: none) | |

Form PCT/ISA/210 (patent family annex) (January 2015)

**REFERENCES CITED IN THE DESCRIPTION**

**Patent documents cited in the description**

- JP 6656702 B